# EUROPEAN PATENT APPLICATION

(11) **EP 4 847 363 A1**
(43) Date of publication of application: **02.12.2026**
(21) Application number: 26180832.3
(22) Date of filing: 25.05.2026
(51) Int. Cl.: B62M 25/00, B62J 45/00, B62K 23/00, H04L 9/40, B62M 9/122, B62M 9/132

(54) **METHOD FOR AUTHENTICATING ELECTRONIC DEVICES**

(30) Priority: 26.05.2025 IT 202500011914
(71) Applicant: Campagnolo S.r.l., 36100 Vicenza (VI) (IT)
(72) Inventor: Armellini Andrea, Lonigo (IT); Famari Carlo, Legnago (IT)

(57) **Abstract**

A method, performed by an external electronic device (50) and by at least one bicycle electronic system (30), mounted on a bicycle and comprising at least one electronic device (20, 201, 202, 203, 204), for enabling the external electronic device (50) to control the at least one bicycle electronic system (30). The method comprises:

detecting, by the external electronic device (50), the at least one bicycle electronic system (30) and displaying, on a display (501) of the external electronic device (50), an indication (502a, 502b, 502c, 502n) corresponding to the at least one detected bicycle electronic system (30);

receiving, on and by the external electronic device (50), a user selection input for selecting one of the at least one bicycle electronic system (30);

pairing, in response to receipt of the user selection input, the external electronic device (50) with the selected bicycle electronic system (30), and preventing the external electronic device (50) from controlling the selected bicycle electronic system (30);

characterized in that the method further comprises:

receiving, on and by the selected bicycle electronic system (30), a first user confirmation input through a physical input element (251) placed on the selected bicycle electronic system (30);

and

receiving, by the external electronic device (50) from the selected bicycle electronic system (30), an authorization message generated in response to receipt of the first user confirmation input;

and, if the authorization message is received within a first period, enabling the external electronic device (50) to control the selected bicycle electronic system (30); and

if the authorization message is not received within the first period, keeping the external electronic device (50) paired with the selected bicycle electronic system (30) in a state in which the external electronic device (50) is prevented from controlling the selected bicycle electronic system (30),

wherein the first period starts in response to receipt of the user selection input on and by the external electronic device (50).

## Description

### Technical Field

The present invention relates to a method for authenticating electronic devices. In particular, the present invention relates to a method for enabling an electronic device external to a bicycle to control a bicycle electronic system comprising at least one electronic device mounted on a bicycle.

### Background Art

In the present description and in the claims, the term "application" means software, or a set of software programs, specifically designed to perform user-facing functions, that is, functions intended for interaction with the user for carrying out activities such as communication with other electronic devices, including the electronic devices of the bicycle electronic system, or the management of data and information.

In the present description and in the appended claims, the term "external electronic device" means any electronic device that does not belong to the bicycle electronic system and is configured to support operation of the application described above. The external electronic device may be any electronic device, fixed or portable, configured to communicate data and information with other electronic devices through a wired or wireless connection, as will be discussed in greater detail below.

Typically, the external electronic device comprises a virtual or physical keyboard to allow input by a user, a screen for displaying indications and information, and optionally a camera, video camera, or photographic camera configured and suitable for acquiring video and/or images.

A bicycle, referred to in the description and in the claims, comprises a motion transmission system that includes a chain extending between toothed wheels associated with the crank axle and with the rear-wheel hub. When more than one toothed wheel is present at at least one of the crank axle and the rear-wheel hub, and the motion transmission system is therefore provided with a gear-shifting system, a front derailleur and/or a rear derailleur is provided.

In the case of an electronically servo-assisted gear-shifting system, referred to briefly here as an electronic gear-shifting system, each derailleur comprises a movable chain-guide element for moving the chain between the toothed wheels in order to vary the transmission ratio, and an electromechanical actuator for moving the chain-guide element.

The actuator in turn typically comprises a motor, typically an electric motor, coupled to the chain-guide element by means of a kinematic mechanism such as an articulated parallelogram, a rack system, or a worm-screw system, as well as a sensor for detecting the position, speed, and/or acceleration of the rotor or of any movable part downstream of the rotor, up to the chain-guide element itself.

The toothed wheels associated with the rear-wheel hub are also called sprockets, while those associated with the crank axle are also called chainrings or gears.

The bicycle also comprises a control device for the front derailleur and a control device for the rear derailleur, typically referred to simply as controls or manual controls, usually mounted on the handlebar near its grips. This facilitates their use, allowing the cyclist to issue commands to the rear or front derailleur in order to move the chain between different sprockets or chainrings.

In one type of manual handlebar control, the control devices also comprise a brake lever for controlling the front-wheel or rear-wheel brake.

In electronic manual control devices, the cyclist issues a request command to shift the transmission ratio. The front or rear derailleur receives the command and actuates its actuator to perform the requested gear shift.

In the bicycle sector, the use of onboard electronic systems is known, which allow the cyclist to interact with external electronic devices, both portable devices, such as smartphones, tablets, and wearable devices, and fixed devices, such as computers. Through such external electronic devices, the cyclist can issue commands to the individual onboard electronic devices or modify settings, parameters, and variables, or update software or firmware of the bicycle electronic system.

As in any system of connected electronic devices, it is of primary importance to provide methods and procedures to ensure that the connection of the various electronic devices is secure, that is, that it prevents unauthorized access or intrusion attempts by unauthorized third parties.

It is also necessary to ensure that the cyclist can safely establish the connection, through their own external electronic device, exclusively with the electronic system of the desired bicycle, thereby avoiding the risk of involuntary connections with vehicles other than the one with which the cyclist actually intends to interact.

EP 4 346 239 A1 discloses a control device for a bicycle comprising a communication interface configured to receive a signal from another control device. The control device further comprises a sensor provided with an ultra-wideband radio. In response to the received signal, the sensor is configured to determine a distance between the control device and the other control device using the ultra-wideband radio.

The control device further comprises a processor in communication with the sensor. The processor is configured to initiate an action of the control device, or of an electronic device in communication with the control device, on the basis of the determined distance.

It is noted that the method described in that document does not guarantee secure and unambiguous identification of the bicycle electronic system with which the connection is to be established. Although the distance measurements may be accurate, the risk of an incorrect connection remains, since the user may not be able to verify with certainty that the identified bicycle actually corresponds to the desired one, thereby generating potential uncertainty at the time of connection. Furthermore, no security elements are provided to prevent connections or intrusions by unauthorized third parties.

US 9,686,812 B2 discloses a system and method for wirelessly identifying and validating an electronic device, in order to initiate a communication process with another device or with a service. The system comprises a portable biometric monitoring device that is identified by a client device or by a server, for the purpose of initiating a pairing procedure. The pairing involves associating the portable device with an online user account with minimal interaction by the user.

It is observed that the document in question describes a pairing procedure between two electronic devices that provides only a single authentication step. Such a configuration, based on just one verification phase, is potentially vulnerable, since it does not make it possible to ensure a sufficient level of security to prevent unauthorized or undesired connections.

US 2024/0414789 A1 discloses methods for using a personal device in order to interact with a peripheral device. The methods may comprise receiving, by the personal device, a pairing message generated by the peripheral device in response to a user interaction with the latter, as well as detecting, by the personal device, a user gesture associated with use of the peripheral device.

The methods may further comprise establishing a dedicated wireless connection with the peripheral device in response to detection of the user gesture, receiving a real-time data stream through the wireless connection, and presenting information to the user based at least in part on the data received from the peripheral device through said real-time data stream.

Here too, it is noted that the document under consideration describes a pairing procedure between two electronic devices that is based exclusively on a single authentication phase. This approach, characterized by a single initial verification, may be insufficient from a security standpoint, since it does not provide adequate guarantees against possible connection attempts by unauthorized devices or against involuntary connections with incorrect devices.

The technical problem underlying the invention is to overcome the above-mentioned drawbacks.

### Summary of the Invention

In accordance with the above objectives, according to the present invention there is provided a method performed by an external electronic device and at least one bicycle electronic system, for enabling the external electronic device to control the at least one electronic system comprising at least one electronic device, as defined in claim 1 and preferably, but not necessarily, in any one of the claims dependent thereon.

The claims describe preferred embodiments of the present invention and form an integral part of the present description.

### Brief Description of the Drawings

In the following, some embodiments of the invention will be described, for better understanding and by way of non-limiting example, with reference to the following attached figures.
Figure 1 shows a side view of a bicycle on which electronic components or devices are mounted, according to the present invention.
Figure 2 shows a schematic example of communication between some electronic devices of the bicycle electronic system and an external electronic device, according to the present invention.
Figure 3 shows a simplified diagram of an electronic device of a bicycle electronic system, according to the present invention.
Figure 4 shows the two side views of a bicycle manual control device, according to the present invention.
Figure 5 shows a rear derailleur and a front derailleur, according to the present invention.
Figure 6 schematically shows an external electronic device and a representation of the application executed on that electronic device, according to the present invention.
Figure 7 shows a flow chart of a method performed by the external electronic device and the bicycle electronic system, according to the present invention.
Figure 8 shows a flow chart of a method performed by the external electronic device and the bicycle electronic system, according to the present invention.
Figure 9 shows a diagram of the transmissions between the external electronic device and the bicycle electronic system, according to one embodiment of the present invention.
Figure 10 shows a diagram of the transmissions between the external electronic device and the bicycle electronic system, according to one embodiment of the present invention.

### Embodiments of the Invention

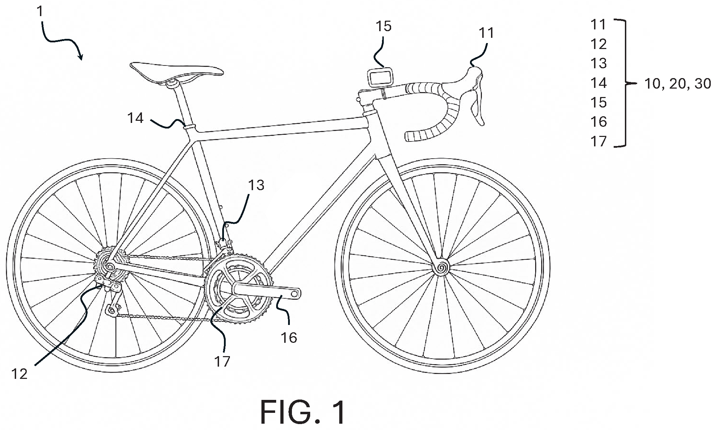

Figure 1 shows a bicycle 1 comprising a plurality of components 10. Such components 10 may be mechanical, electromechanical, electrical, and electronic elements.

Among the components that a bicycle may comprise are handlebar-mountable control devices 11, the gear shift 12, also defined as the rear derailleur, the derailleur 13, also defined as the front derailleur, the saddle adjustment mechanism 14, the cycle computer 15, and the crank 16 forming part of the crankset 17. For the description of these elements, reference is made to the introductory part.

The components that may be mounted and that may form an integral part of the bicycle 1 are not limited to those just mentioned, but may include, by way of non-limiting example and not shown in Figure 1, one or more light-emitting elements, brakes, motion or force sensors, sensors for detecting biometric characteristics of the cyclist, a motor for pedal assistance, and so on.

It will be clear to the person skilled in the art that every element mountable on the bicycle is to be considered a component 10 of the bicycle to which the present invention may be applied.

Each bicycle component 10 may comprise, or may operate by means of, purely mechanical mechanisms, in which case it is referred to as a mechanical component, mechanically operated mechanisms activated electrically, in which case it is referred to as an electromechanical component, electrical mechanisms, in which case it is referred to as an electrical component, or electronic mechanisms, in which case it is referred to as an electronic component.

It will also be clear to the person skilled in the art that a component 10 may operate by means of at least one of a mechanical, electrical, and electronic mechanism, or by means of a combination of several of these mechanisms.

In the remainder of the text, reference will be made to bicycle components 10, this term meaning any component 10 that may operate by means of at least one of a mechanical, electrical, and electronic mechanism, or by means of a combination thereof.

It will also be clear that not all of the components 10 described in this description and represented in the figures are necessarily part of the invention, some being optional or provided as alternatives to one another, as will be apparent to the person skilled in the art.

Furthermore, the bicycle components 10 may each be housed in their own casing or housing; alternatively, two or more components may share the same casing or housing.

The bicycle components 10 forming the subject of the present invention may be mounted permanently on the bicycle, may be removably mounted on the bicycle, or may be worn by the cyclist.

At least one of the bicycle components 10 is an electronic device, hereinafter defined as a bicycle electronic device 20. The set of bicycle electronic devices 20 is defined as the bicycle electronic system 30.

Typically, a bicycle comprises only one bicycle electronic system 30; however, optionally, a bicycle may comprise more than one bicycle electronic system 30.

In Figure 1, all the components 10, namely the handlebar control device 11, the rear derailleur or gear shift 12, the front derailleur 13, the seatpost 14, the cycle computer 15, the crank 16, and the crankset 17, are identified as electronic devices 20 respectively forming part of the bicycle electronic system 30.

However, Figure 1 is purely descriptive and does not limit the type of electronic devices 20 to those indicated, nor does it imply that all the components 10 indicated as bicycle electronic devices 20 in Figure 1 are necessarily bicycle electronic devices 20.

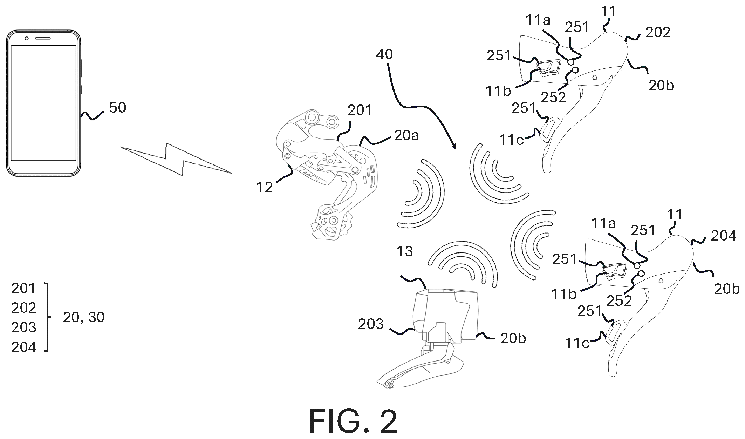

Figure 2 shows an example of bicycle components 10 that are bicycle electronic devices 20, such as one or more manual control devices 11, also identified as electronic devices 202 and 204, the rear derailleur or gear shift 12, also identified as electronic device 201, and the front derailleur 13, also identified as electronic device 203.

The electronic devices 201, 202, 203, 204 are shown isolated from the bicycle 1 only for illustrative purposes; however, it will be clear to the person skilled in the art that such electronic devices 201, 202, 203, 204 are mounted on the bicycle 1, fixedly or removably, as discussed with reference to Figure 1.

For simplicity, Figure 2 shows two manual control devices 11, which are typically mounted at the two ends of the handlebar of the bicycle 1. However, a typical bicycle electronic system 30 may comprise one or more manual control devices 11.

It will be clear to the person skilled in the art that the invention, although described with reference to an electronic system 30 comprising two manual control devices 11, applies equally to an electronic system comprising any number of manual control devices 11.

It will likewise be clear to the person skilled in the art that any other component 10 may be an electronic device 20, as already explained above, and that the absence of the other components from the visual representation of Figure 2 is merely illustrative and is not limiting or exhaustive.

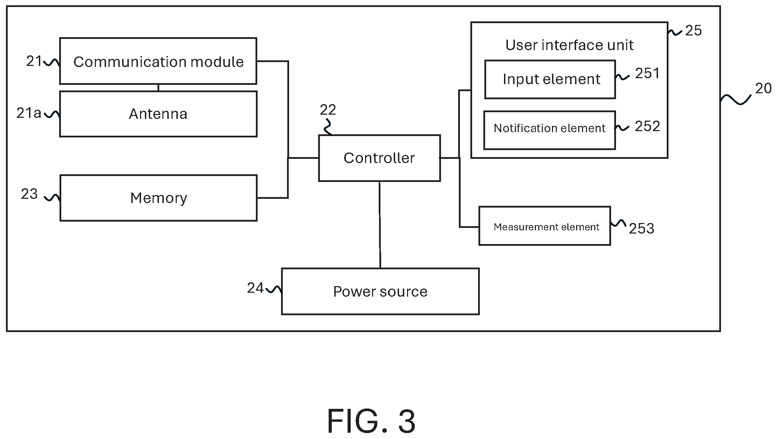

Furthermore, with reference to Figure 2 and Figure 3, in this description and in the claims, electronic device 20 means an apparatus, device, module, or component provided with active and/or passive electronic circuits configured to process, transmit, receive, or manage electrical signals or data, possibly in combination with sensors, actuators, user interfaces, or communication systems.

The electronic device 20 may also comprise electrical and electromechanical components, such as a gearmotor, a motor, a relay, a linear actuator, a fan, a solenoid, or other elements intended to generate a mechanical action in response to electrical or electronic signals.

It will be clear to the person skilled in the art that every bicycle component 10 may be a bicycle electronic device 20 if it has the characteristics mentioned above.

At least part of the electronic devices 20, 201, 202, 203, 204 of the bicycle electronic system 30 is capable of and configured to communicate data or information with another electronic device forming part of the bicycle electronic system 30, or external thereto, such as the external electronic device 50.

This communication may take place by means of electrical signals, when the connection between the bicycle electronic device 20, 201, 202, 203, 204 and the further electronic device is a wired connection, or by means of wireless signals or electromagnetic signals, such as, for example, Bluetooth^{®}, BLE - Bluetooth Low Energy - ANT, ANT+, Zigbee, Z-Wave, infrared - IR - NFC - Near Field Communication - RFID, Ultra-Wideband - UWB - Wi-Fi, Thread, LoRa, Cellular - 2G, 3G, 4G LTE, 5G - Sigfox, satellite systems, for example GPS or Starlink, WiGig, microwave, millimeter wave, ISM Band RF, EnOcean, or any other wireless signal using radio frequency, microwave, millimeter waves, infrared, visible light, ultraviolet, and the like.

In the case of wireless communication, the electronic devices 20, 201, 202, 203, 204 that communicate with one another or with the external electronic device 50 are generally without physical electrical connections, that is, they are not connected to one another by cables.

However, still within the scope of wireless communication, if the electronic devices 20, 201, 202, 203, 204 that communicate with one another or with the external electronic device 50 are connected by cable or by any other connection made of an electrically conductive material, such connection is used exclusively for the transmission of electrical power and not for the transmission of data.

In other words, it is not used for the exchange of information between the communicating electronic devices 20, 201, 202, 203, 204.

For transmission of data or information is meant the process by which electrical or electromagnetic signals containing meaning are sent from a source to one or more recipients through a physical or electromagnetic medium, namely an electromagnetic wave.

The information content may be represented by variations in physical quantities such as voltage, current, frequency, phase, or intensity.

The transmission of data or information is the process by which a transmitting electronic device encodes data or information into intentional and structured variations of a physical quantity, such as voltage, current, frequency, or light, in order to communicate them to one or more receiving electronic devices.

Such variations follow a known scheme, namely modulation or encoding, which allows the information content to be reconstructed by the at least one receiving electronic device.

In this context, the transmission of power, for the purpose of supplying an electrical or electronic element by an energy source, is not considered, in the remainder of the text, to be transmission of data or information, since it does not involve encoding data or information into intentional and structured variations of a physical quantity.

In the following text and in the appended claims, the term "signal" will be used to indicate an electrical or electromagnetic signal used for the transmission of data or information, or, briefly, to communicate data or information between at least two electronic devices 20, 201, 202, 203, 204.

The term "signal" in the remainder of the description and in the claims does not include the transmission of power for the purpose of supplying a bicycle electronic device 20, 201, 202, 203, 204 or the external electronic device 50.

Furthermore, in the following text and in the appended claims, the terms "communicate" or "communication" will be used to indicate the transmission or reception of a "signal" as defined above.

When the bicycle comprises a plurality of electronic devices 20, 201, 202, 203, 204 and at least part of such electronic devices 20, 201, 202, 203, 204 are connected to one another in order to communicate, this set of electronic devices is defined as a bicycle network 40.

The bicycle network 40 comprises a set of interconnected electronic devices 20, 201, 202, 203, 204 that communicate with one another by exchanging signals through physical links, for example cables, or wireless links, for example radio waves.

Each device of the network 40 may perform one or more roles, such as source, recipient, repeater, or information processor, and the network 40 may be designed to operate in a centralized, distributed, or cooperative manner.

The definition of the various types of architecture with which the network 40 may be constructed falls outside the scope of the present invention, since this forms part of the common technical knowledge of the person skilled in the art.

In a non-limiting example shown in Figure 2, the electronic devices 20, 201, 202, 203, 204 forming part of the electronic system 30 and of the network 40 communicate with one another and also communicate individually with one or more external electronic devices 50 outside the network.

In another example, the electronic devices 20, 201, 202, 203, 204 forming part of the electronic system 30 and of the network 40 communicate with one another, but only one electronic device 201, for example the gear shift 12, communicates with one or more external electronic devices 50 outside the network 40.

In this case, the electronic devices 20, 201, 202, 203, 204 of the network 40 may be divided into a central device 20a, or master, and at least one peripheral device 20b, or slave.

The central device 20a is the electronic device 20, 201, 202, 203, 204 that can communicate, and does communicate, with one or more external electronic devices 50 outside the network 40 and with the at least one peripheral device 20b of the network 40.

The peripheral devices 20b are devices that can communicate, and do communicate, exclusively with the central device 20a or with at least one peripheral device 20b.

In one example, the peripheral devices 20b can communicate, and do communicate, exclusively with the central device 20a.

In the example of Figure 2, the central device 20a is the rear derailleur or gear shift 12 - identified as electronic device 201 - and the peripheral devices 20b are the other electronic devices 202, 203, 204 of the bicycle electronic system 30 that are connected in the bicycle network 40.

When the network 40 comprises more than two electronic devices 20, 201, 202, 203, 204, one electronic device 201 assumes the role of central device 20a - in the example of Figure 2, the gear shift 12 - and communicates both with the other electronic devices 202, 203, 204 of the network 40 and with one or more external devices 50 outside the network 40.

The other electronic devices 202, 203, 204 of the network 40 assume the role of peripheral devices 20b and communicate exclusively with the central device 20a, or with the central device 20a and with other peripheral devices 20b.

The assignment, in Figure 2, of the role of central device 20a to the gear shift 12 is purely illustrative and non-limiting. The person skilled in the art is able, using their technical knowledge, to understand that any electronic device 20, 201, 202, 203, 204 may assume the role of central device 20a and, consequently, the other electronic devices 20, 201, 202, 203, 204 each assume the role of peripheral devices 20b.

Figure 3 shows a general diagram of an electronic device 20, such as the electronic devices 201, 202, 203, and 204 of the bicycle electronic system 30 shown in Figure 2.

In order to communicate with another electronic device 20 or with one or more external devices 50, an electronic device 20 requires a communication interface or communication module 21, meaning one or more electrical and/or electronic components suitable for allowing the transmission and reception of electrical or electromagnetic signals.

For example, in the case of wireless communication, the communication module 21 may comprise at least one of a wireless module, a transceiver, a receiver, and a transmitter, or any other component configured to receive signals.

The communication module 21 comprises at least one antenna 21a configured to receive and/or transmit the signal according to the communication protocol used.

The at least one antenna 21a may be an integral part of the communication module 21 or may be external and connected thereto.

The bicycle electronic system 30 further comprises at least one processing unit or controller 22.

The controller 22 comprises at least one processor, typically a microprocessor or microcontroller, suitable for processing data and managing the other components of the bicycle electronic system 30, including the communication module or modules 21, suitable procedures and/or hardware, software, and/or firmware modules containing the relevant instructions being provided.

In the present description and in the appended claims, controller 22 is to be understood as a logical unit that may be formed by one or more physical units, in particular by one or more microprocessors.

The controller 22 is provided with, or is in communication with, a memory 23 for volatile and/or non-volatile storage of program instructions, parameters, variables, constants, and, more generally, data.

In the present description and in the appended claims, memory 23 is to be understood as a logical unit that may be formed by one or more physical units, in particular by one or more flash memories, RAM, ROM, EPROM, and the like, which may be contained in one or more casings or housings together with one or more of the electronic devices 20 of the bicycle electronic system 30.

In one example, each electronic device 20 of the bicycle electronic system 30 comprises a controller 22, that is, it comprises a logical unit that may be formed by one or more physical units, in particular by one or more microprocessors.

In another example, the controller 22 is configured and suitable for managing more than one electronic device 20 of the bicycle electronic system 30. In that case, the controller 22 may be mounted on one of the electronic devices 20 that it manages, or it may be mounted on the bicycle in a casing or housing dedicated to it.

The bicycle electronic system 30 comprises one or more power sources 24.

The one or more power sources 24 comprise at least one accumulator, such as a battery, rechargeable or non-rechargeable, for example a lithium-ion battery, a lithium-polymer battery, a nickel-metal hydride battery, a nickelcadmium battery, a solid-state battery, a lead-acid battery, a thin-film microbattery, a capacitor, and the like.

As an alternative or in addition to the at least one accumulator, the one or more power sources 24 may comprise an energy recovery device or element. This means a device or element capable of generating or converting a form of environmental energy - mechanical, thermal, light, electromagnetic, or other energy - into electrical energy, so as to power an electronic circuit, reduce the energy requirement from external sources, or ensure energy autonomy for the device itself.

A non-exhaustive and non-limiting list of energy recovery devices or elements comprises at least one of: a photovoltaic solar panel, an organic solar cell, an electromagnetic generator - dynamo - a piezoelectric element, a triboelectric element, an electrical generator with a resonant system for converting mechanical vibrations into electrical energy, a thermoelectric generator, an antenna for RF energy harvesting, a backscatter circuit, or a hybrid system of the mentioned elements, or a combination of one or more of the mentioned elements, and the like.

Optionally, the at least one power source 24 is of the "smart" type, that is, it is provided with a dedicated control processing unit, such as a microprocessor, and with a memory for battery data, such as operating parameters, charge/discharge cycles, remaining charge, and so on.

In one example, each bicycle electronic device 20 comprises at least one power source 24.

In another example, the at least one power source 24 supplies power, that is, powers, a plurality of electronic devices 20 of the bicycle electronic system 30, and is included in an electronic device 20 or positioned on the bicycle externally to any electronic device 20.

At least part of the bicycle electronic devices 20 comprises a user interface unit 25 to allow interaction between the user and the electronic device 20.

The user interface unit 25 typically comprises at least one electromechanical element, or an electrical or electronic input element, hereinafter generally referred to as input element 251, or physical input element 251, for generating electrical pulses or signals resulting from the user's interaction with that input element 251.

The input elements 251 may comprise at least one of a switch, a push-button, a keyboard, a joystick, a rotary encoder, a potentiometer, a proximity sensor, a gesture or motion sensor - for example infrared or radar sensors - a capacitive or inductive touch sensor, and the like.

The person skilled in the art will understand that the list of input elements 251 is purely exemplary and is not intended to limit or exhaustively define the possible configurations of input elements 251 applicable to a bicycle electronic device 20.

Any other input element 251 suitable for allowing interaction between the user and the associated electronic device 20, or the bicycle electronic system 30, therefore falls within the scope of the present invention.

In particular, when the electronic device 20 is a bicycle manual control device 11, as discussed in the introductory part, it may comprise at least one input element for generating gear-shift or derailleur-shift requests, for modifying the operating mode of the manual control device itself, or for sending data to a bicycle electronic device 20 or to an external electronic device 50.

The user interface unit 25 may also comprise a notification element 252 configured to provide information on the status, and on the correct or incorrect operation, of the associated electronic device 20.

By notification element 252 is meant any electrical, electronic, or electromechanical element capable of providing a signal perceptible to the user, intended to communicate operating or status information and/or to convey instructions relating to actions to be carried out, currently being carried out, or already carried out, on the electronic device 20 or on the bicycle electronic system 30.

The notification element 252 comprises at least one LED, indicator light, graphic display, segment display, light emitter, light projector, piezoelectric buzzer, loudspeaker, tone or sound-sequence emitter, sound and/or synthesized-voice reproducer, tactile notification emitter such as a vibrating motor, an element provided with haptic feedback, and so on.

The person skilled in the art will understand that the list of notification elements 252 is purely exemplary and is not intended to limit or exhaustively define the possible configurations of notification elements 252 applicable to the bicycle electronic device 20.

Any other notification element 252 suitable for communicating information visually, audibly, or tactilely, or for instructing the user regarding actions to be carried out, currently being carried out, or already carried out, on the electronic device 20 or on the bicycle electronic system 30, therefore falls within the scope of the present invention.

A bicycle electronic device 20 may comprise the user interface unit 25 or may lack it. Furthermore, when the bicycle electronic device 20 comprises the user interface unit 25, the latter may comprise one or more input elements 251 and/or one or more notification elements 252.

As an alternative or in combination with this, the user interface 25 may itself constitute an electronic device 20 separate from the other electronic devices 20 of the bicycle electronic system 30, and therefore be provided with its own housing and mounted, like the other electronic devices 20, independently on the bicycle.

Optionally, the bicycle electronic system 30 may comprise one or more measurement elements, not shown in the figures, configured to detect in real time the variation of physical quantities that evolve over time, such as parameters relating to the functioning of the human body, or to the movement or status of the bicycle, or to the external environment.

Examples of measurement elements suitable for measuring parameters linked to the functioning of the human body include a heart-rate sensor, an ECG sensor, a blood-pressure sensor, a pulse oximetry sensor, a respiratory-rate sensor, a non-invasive glucose sensor, a pH sensor, a body-temperature sensor, a bioelectrical impedance sensor, a sensor combining the functions of several of the sensors just described, and the like.

Examples of measurement elements suitable for measuring parameters linked to the movement or status of the bicycle 1 or to the external environment include a speed sensor, a cadence sensor, a power sensor, a torque sensor, an accelerometer, a gyroscope, an inclination sensor, a GPS sensor, an altitude sensor, an ambient-light sensor, a tire-pressure sensor, a temperature sensor, a pedaling sensor, or a combination of several of the sensors just described, and the like.

The person skilled in the art will understand that the list of measurement elements is purely exemplary and is not intended to limit or exhaustively define the possible configurations of measurement elements applicable to the electronic device 20 or to the bicycle electronic system 30.

Any other measurement element suitable for detecting physical quantities that vary over time, relating to the human body, to the movement or status of the bicycle, or to the external environment, therefore falls within the scope of the present invention.

The at least one measurement element may form part of a bicycle electronic device 20 or may itself be a stand-alone bicycle electronic device 20, therefore having all the characteristics of the bicycle electronic devices 20 described above.

Typically, in a bicycle provided with an electronic system 30 such as the one just described, the individual electronic devices 20 forming part of it are configured and used to control other electronic devices 20, by sending signals - electrical or electromagnetic signals - in order to generate a mechanical action.

For example, an electronic device 20, being a manual control device 11, allows the cyclist to send instructions to the gear shift 12 and/or to the derailleur 13 to move the chain on the sprockets and/or on the chainrings.

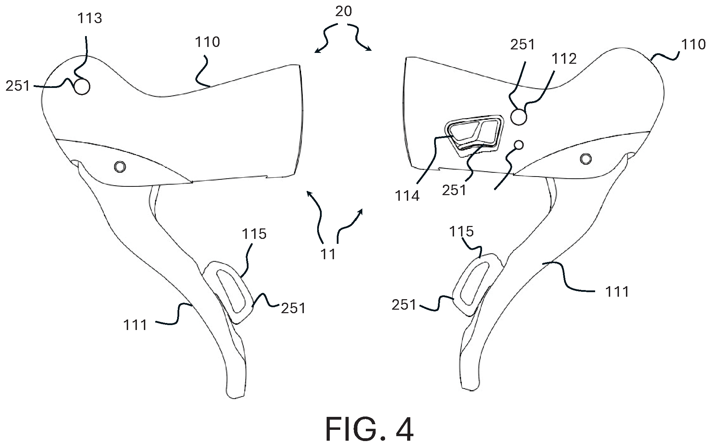

Figure 4 shows an example of a manual control device 11, being an electronic device 20, such as electronic device 202 or electronic device 204 of Figure 2, which comprises a main body 110 configured to be mounted on the handlebar of the bicycle 1, and may comprise a brake lever 111 pivoted to the body 110 of the control device around an axis and configured to actuate the brakes of the bicycle 1.

The manual control device 11 further comprises one or more input elements 251, such as buttons 112 and 113, an actuator element 114, and a lever 115.

All the above-mentioned input elements 251 are configured to be actuated by the user, namely the cyclist, in order to generate electrical pulses or signals resulting from the actuation, as set out above.

Typically, the interaction between the user and an input element 251 generates an electrical signal.

The generation of the electrical signal may occur, for example in the case of buttons or levers, by closing a switch, or it may occur by detecting the interaction itself between the user and the at least one input element 251, for example in the case of proximity sensors or touch sensors.

The set of input elements 251 forms part of the user interface 25 of the manual control device 11.

The manual control device 11, being a bicycle electronic device 20, comprises the characteristics of the bicycle electronic devices 20 described with reference to Figure 3, to which reference is made.

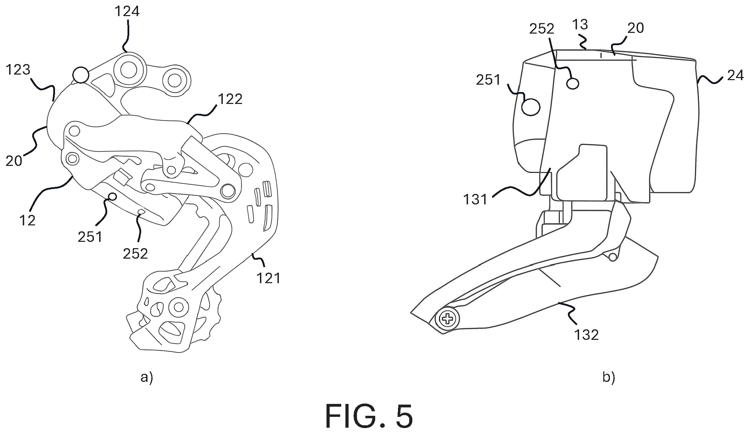

Figure 5 shows a rear derailleur or gear shift 12, panel a), and a front derailleur 13, panel b).

The gear shift 12 comprises a chain-guide element 121, or simply chain guide 121, which is movable to move the chain between the toothed wheels in order to vary the transmission ratio.

The chain guide 121 is connected to a movable element 122, which in turn is movably connected to a main body 123.

An actuator element, for example a gearmotor, not shown in the figure, allows movement of the chain guide 121 in order to carry out movement of the chain on the sprockets, not shown.

The gear shift 12 is fixedly mounted to the bicycle by means of a mounting element 124 fixed to, or forming part of, the main body 123.

The gear shift 12 may be a bicycle electronic device 20 and, as such, comprises the characteristics of the bicycle electronic devices 20 described with reference to Figure 3, to which reference is made, such as, for example, the input element 251 and the notification element 252 shown in this figure.

An example of input element 251 may be a button placed on the main body 123. Such button may control the status of the energy source 24 associated with the gear shift 12, the connection, pairing, or unpairing of the gear shift 12 with other electronic devices 20 of the bicycle electronic system 30, the calibration of the actuator element, and so on.

The front derailleur 13 comprises a chain-guide element 132 and a main body 131 configured for fixed mounting on the bicycle.

An actuator element, for example a gearmotor, not shown in the figure, allows movement of the chain guide 132 in order to carry out movement of the chain on the chainrings, not shown.

The front derailleur 13 may be a bicycle electronic device 20 and, as such, comprises the characteristics of the bicycle electronic devices 20 described with reference to Figure 3, to which reference is made, such as, for example, the input element 251 and the notification element 252 shown in this figure.

An example of input element 251 may be a button placed on the main body 131. Such button may control the status of the energy source 24 associated with the front derailleur 13, the connection, pairing, or unpairing of the front derailleur 13 with other electronic devices 20 of the bicycle electronic system 30, the calibration of the actuator element, and so on.

For the description of the characteristics, elements, and function of the bicycle electronic devices 20, reference is made, and explicit reference is made, to the description of Figure 2.

Such characteristics, elements, and functions apply in full to the manual control device 11 shown in Figure 4 and to the gear shift 12 and front derailleur 13 shown in Figure 5.

In general, a user, by acting on the user interface unit 25, in particular on the input element 251, of a first electronic device 20, for example electronic device 202 or 204 of Figure 2, may enter a user input to control that same first electronic device 202 or 204 or a second electronic device 20, for example electronic device 201 or 203 of Figure 2, of the bicycle electronic system 30.

Where the user input is entered by the cyclist on the input element 251 of the first electronic device 202 or 204 in order to control a second electronic device 201 or 203, the user's action on the input element 251 generates an electrical signal that is processed by the controller 22 of the first electronic device 202 or 204 to be sent, by wireless or wired communication, to the second electronic device 201 or 203.

The transmission of the signal from the first electronic device 202 or 204 to the second electronic device 201 or 203 may take place directly, that is, the first electronic device 202 or 204 sends the signal directly to the second electronic device 201 or 203, which interprets it and executes the command corresponding to the received signal.

Alternatively, the transmission may take place indirectly, in which case the first electronic device 202 or 204 sends the signal to an intermediate electronic device, which in turn sends the signal, modified or as originally received, to the second electronic device 201 or 203.

The intermediate electronic device may be a bicycle electronic device 20, for example the other of electronic devices 201 or 203 to which the signal is not addressed, thus forming part of the bicycle electronic system 30 and of the network 40. Alternatively, it may be an external electronic device, for example the external electronic device 50 of Figure 2, and therefore not belonging to the bicycle electronic system 30 or to the network 40.

One example consists of the cyclist acting on an input element 251 of the control device 11, being the first electronic device 202 or 204, for example on the lever 115 and/or on at least one of the buttons 112 and 113, or on the actuator element 114, in order to issue a gear-shift command for the gear shift 12 or the front derailleur 13, being respectively the second electronic device 201 or 203.

Following such action, corresponding for example to the closing of a switch associated with said input element 251, the controller 22 of the manual control device 11 generates a signal and sends it, through the communication module 21, to the gear shift 12 or to the front derailleur 13.

Such transmission may take place directly, that is, the signal is transmitted directly from the manual control device 11 to the gear shift 12 or to the front derailleur 13, or indirectly, that is, the signal is transmitted to an intermediate electronic device and then transmitted in turn to the gear shift 12 or to the derailleur 13.

The manual input of the user, namely the cyclist, on the input element 251 of the first bicycle electronic device 202 or 204 is not limited to controlling a mechanical action of a second electronic device 201 or 203.

It may also control, for example, the changing of software or firmware settings of the second electronic device 201 or 203, the pairing of the first electronic device 202 or 204 with other electronic devices forming part of the bicycle electronic system 30 or external thereto, the initialization of procedures such as the establishment of the network 40, the updating of the software/firmware of the bicycle electronic system 30, or interaction with an external electronic device 50.

Such external electronic device may be, for example, a portable device, such as a smartphone, a tablet, a personal computer, a television, a screen, a simulator, a training device, and the like.

In one embodiment of this invention, the interaction between the user, namely the cyclist, and the manual input element 251 of an electronic device 20 of the bicycle electronic system 30 allows interaction between the bicycle electronic system 30 and an external electronic device 50.

In particular, actuation of the manual input element 251 allows the bicycle network 40 to interact with the external electronic device 50.

In one example, already set out above, the electronic devices 20, 201, 202, 203, 204 of the bicycle electronic system 30 are interconnected with one another in a network 40 and communicate data, that is, they send and receive signals, with one another.

In one example, the network 40 provides for a central device 20a and at least one peripheral device 20b configured to communicate only with the central device 20a.

The central device 20a can communicate, and does communicate, with all the peripheral devices 20b and is configured to communicate with a device 50 external to the network 40.

In another example, each bicycle electronic device 20, 201, 202, 203, 204 is configured to communicate, and does communicate, with the other electronic devices 20, 201, 202, 203, 204 of the network 40, and at least one of the electronic devices 20, 201, 202, 203, 204 of the bicycle electronic system 30 is configured to communicate with a device 50 external to the network 40.

The details regarding the architecture of the network 40 will be omitted for the sake of brevity, since they form part of the technical knowledge of the person skilled in the art, who will understand, depending on requirements and circumstances, which type of network 40 to configure.

The external electronic device 50 may be a smartphone or a tablet, or in any case a portable or fixed device capable of executing software or an application, that is, instructions executable by a processor, such as controller 22, designed to perform specific operations or functions.

In particular, the external electronic device 50 is any electronic device that can execute an application or "app," that is, software, or a set of software programs, specifically designed to perform user-facing functions, meaning functions intended for interaction with the user for carrying out activities such as communication with other electronic devices, including the electronic devices 20 of the bicycle electronic system 30 of the bicycle 1, or the management of data.

The external electronic device 50 may comprise some or all of the characteristics, elements, and functionalities described above with reference to Figure 3 regarding an electronic device 20 of the bicycle electronic system.

The external electronic device further comprises a display or screen configured and suitable for displaying information in textual, visual, and iconographic form, and may comprise elements for reproducing or acquiring sounds or images, such as a loudspeaker, a microphone, a video camera, a photographic camera, and the like.

In the context of the present invention, the term "application" or "app" is to be understood as a user-level software component.

In order to interact with the bicycle electronic system 30, and therefore with the network 40, the external electronic device 50 and the electronic system 30 of the bicycle 1 must be connected to one another.

In the description and in the appended claims, interaction between the external electronic device 50 and the bicycle electronic system 30 means the exchange of signals, messages, information, or data between the external electronic device 50 and at least one electronic device 20 of the bicycle electronic system 30.

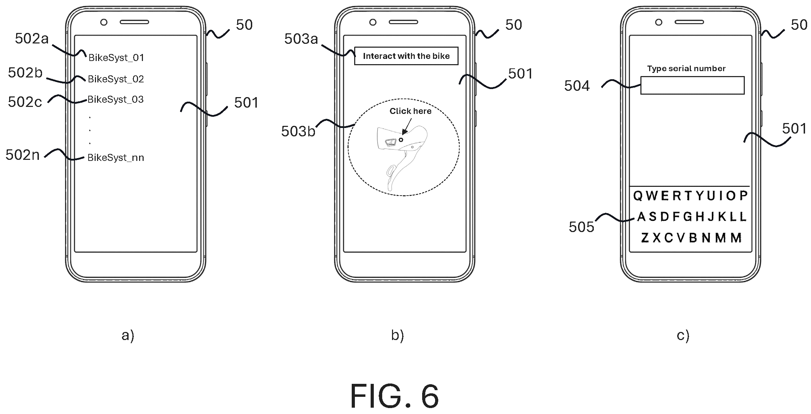

To connect the external electronic device 50 and the electronic system 30 of the bicycle 1, and therefore the network 40, the user runs a dedicated application on the external electronic device 50, which is displayed on the display 501 of the latter, as schematically shown in Figure 6.

The external electronic device 50 is configured to detect all bicycle electronic systems 30 that are located within a range such as to allow reception of the broadcast signals transmitted by them.

In the description and in the appended claims, broadcast signals are defined as signals transmitted periodically by an electronic device, for example at least one of the electronic devices 20, 201, 202, 203, 204 of a bicycle electronic system 30, in a non-addressed manner and accessible to any other receiving device present within the communication range, in order to make known its availability status for connection.

Such broadcast signals may contain, by way of non-limiting example, a unique identifier of the transmitting device, information on the type and/or operating status of the device, basic parameters for establishing communication - for example protocol version, communication channel, access priority - and any authentication or compatibility constraints required for pairing with other devices.

Reception of such broadcast signals by the external electronic device 50 allows the latter to identify the transmitting electronic device 20, 201, 202, 203, 204 as a potential communication node and to start a connection procedure, which may include authentication operations, key exchange, or negotiation of connection parameters.

The broadcast signals may vary in structure, content, and transmission frequency depending on the communication protocol used.

The details regarding the types of signal and their encoding will not be dealt with in this description, since they form part of the common technical knowledge of the person skilled in the art.

The communication protocols that may be used may be, for example, Bluetooth^{®}, BLE - Bluetooth Low Energy - ANT, ANT+, Zigbee, Z-Wave, infrared - IR - NFC - Near Field Communication - RFID, Ultra-Wideband - UWB - Wi-Fi, Thread, LoRa, Cellular - 2G, 3G, 4G LTE, 5G - Sigfox, satellite systems, for example GPS or Starlink, WiGig, microwave, millimeter wave, ISM Band RF, EnOcean, or any communication protocol using radio frequency, microwave, millimeter waves, infrared, visible light, ultraviolet, and the like.

The bicycle electronic systems 30 of bicycle 1 that are detected are shown on the display 501 of the external electronic device 50.

Each electronic system 30 is associated with a unique identifier 502a, 502b, 502c, 502n, shown on the display 501, which allows the user to identify and choose which bicycle electronic system 30 to connect the external electronic device 50 to.

At this point, the user selects, on the display 501 of the external electronic device 50, the bicycle electronic system 30 to which they wish to connect.

In other words, the external electronic device 50 receives from the user a selection input, intended to request connection of the external electronic device 50 with the at least one bicycle electronic system 30.

By "selection input" is meant an action performed by the user on the external electronic device 50, aimed at selecting an element displayed on the display 501 of that external electronic device 50.

The selection input may be carried out by various interaction methods, including, by way of non-limiting example:
- a direct touch on an icon or sensitive area of the screen through a touch interface;
- pressing a physical button or a virtual key associated with selection of an element;
- using a cursor controlled by a mouse, trackpad, trackball, or joystick, followed by a click or equivalent command;
- a touch gesture, for example swipe, long press, or double tap, recognized by the system as a selection command;
- voice commands interpreted by the system as an instruction to select an on-screen element;
- eye or head movements detected by eye-tracking systems or gesture interfaces;
- use of buttons or remote controls, for example buttons on other external electronic devices connected to the external electronic device 50.

All the above input methods are considered equivalent for the purposes of implementing the invention and fall within the scope of the present description.

Once the selection input has been entered, and therefore the bicycle electronic system 30 to which the user intends to connect has been selected, the external electronic device 50 and the bicycle electronic system 30 begin the pairing or connection procedure.

The term pairing means a pairing and/or bonding procedure that allows a connection to be established between the external electronic device 50 and a bicycle electronic device 20, 201, 202, 203, 204.

During the pairing procedure, the external electronic device 50 and a bicycle electronic device 20, 201, 202, 203, 204 exchange data and information useful for mutual communication, enabling subsequent direct connections between the two electronic devices.

In other words, during this procedure, a certain number of messages are exchanged between the electronic system 30 and the external electronic device 50.

The type and structure of these messages depend on the type of communication - that is, the protocol - used, and typically include information on the identity of the electronic devices 20, 201, 202, 203, 204 of the electronic system 30 and of the external electronic device 50 to be paired.

The exchange of such messages allows there to be, at the end of the pairing process, at least partial communication between the external electronic device 50 and the electronic system 30.

In one example, the connection between the external electronic device 50 and the bicycle electronic system 30 takes place in such a way as to pair at least part of the electronic devices 20, 201, 202, 203, 204 of the electronic system 30 with the external electronic device 50.

Optionally, all the electronic devices 20, 201, 202, 203, 204 of the electronic system 30 are individually paired with the external electronic device 50.

In another example, only one electronic device 20, 201, 202, 203, 204 of the electronic system 30 is paired with the external electronic device 50, while the remaining electronic devices 20, 201, 202, 203, 204 are not directly paired with the external electronic device 50, that is, they cannot communicate directly with it.

Usually, the electronic device 20, 201, 202, 203, 204 of the electronic system 30 that connects or pairs directly with the external electronic device 50 is the central device 20a, while the remaining electronic devices 20, 201, 202, 203, 204 that do not communicate directly with the external electronic device are peripheral devices 20b.

Reference is made to the discussion set out above regarding this type of architecture of the network 40.

One of the problems to be solved by the present invention lies in the fact that the identifiers 502a, 502b, 502c, 502n displayed on the display 501 of the external electronic device 50 are usually codes that are not descriptive of the electronic system 30 with which pairing is intended to be carried out.

Consequently, the user may erroneously select an electronic system 30, that is, a bicycle 1, different from the desired one, which results in connection of the external electronic device 50 with an electronic system 30, that is, a bicycle, different from the one with which the user intends to communicate.

This drawback occurs in particular when several bicycles, and therefore several bicycle electronic systems 30 that send broadcast signals, are present near the user operating the external electronic device 50.

In such situations, the external electronic device 50 detects all the electronic systems 30 of the surrounding bicycles and displays the respective identifiers 502a, 502b, 502c, 502n on the screen, generating potential uncertainty in the user's choice.

A further problem to be addressed consists in the fact that any user in possession of an external electronic device 50, for example a smartphone on which the dedicated application is installed, could potentially connect to an electronic system 30 associated with a bicycle that is not their property.

In such circumstances, security-related issues could arise, particularly when the dedicated application allows commands to be issued to the electronic system 30 for controlling mechanical or electromechanical components 10, or even for locking the components 10, that is, the electronic devices 20, 201, 202, 203, 204, of the bicycle 1.

To overcome these problems, once the external electronic device 50 pairs with, or more simply connects to, the bicycle electronic system 30 - or, stated differently, with at least one electronic device 20, 201, 202, 203, 204 - it is prevented from controlling the electronic system 30, namely the aforesaid electronic devices 20, 201, 202, 203, 204.

In other words, the connection obtained by selecting the identifier 502a, 502b, 502c, 502n on the display 501 of the external electronic device 50, between the external electronic device 50 and the electronic system 30, does not enable the user to issue control commands to the bicycle electronic system 30 through the external electronic device 50, thereby ensuring an additional level of security.

Furthermore, when the first selection input is entered, that is, when the user selects the bicycle electronic system 30 to which they intend to connect, the external electronic device 50 starts a first timer, having a defined and limited duration, hereinafter referred to as the "first period."

The first period may be, for example, less than or equal to 45 seconds, or less than or equal to 30 seconds, or less than or equal to 15 seconds.

Within the first period, in order to enable the external electronic device 50 to control the electronic system 30, the user must interact with the electronic system 30 with which they intend to connect the external electronic device 50.

In one embodiment, the user brings the external electronic device 50 close to an electronic device 20, 201, 202, 203, 204 of the electronic system 30 with which they intend to connect, so as to enter the reading range of an NFC chip or of another short-range communication system.

Such close-range interaction makes it possible to activate a secure authentication or enabling procedure, aimed at confirming the user's intention to establish a connection with the corresponding electronic system 30.

In a further embodiment, the user frames, by means of the external electronic device 50, a two-dimensional or three-dimensional code - for example a barcode, a QR code, or similar encodings - applied to an electronic device 20, 201, 202, 203, 204 belonging to the electronic system 30 with which they intend to connect.

The code is acquired and interpreted by the dedicated application running on the external electronic device 50, serving as confirmation of the user's intention to establish a connection with the corresponding electronic system 30.

In yet another embodiment, the user actuates an input element 251 present on one of the electronic devices 20, 201, 202, 203, 204 of the electronic system 30 of the bicycle 1 with which they wish to establish the connection.

In other words, the electronic system 30 selected for connection, that is, an electronic device 20, 201, 202, 203, 204 of that electronic system 30, receives a first user confirmation input, hereinafter referred to as the first confirmation input, through a physical input element 251 placed on the at least one electronic device 20, 201, 202, 203, 204 of the bicycle electronic system 30.

The first confirmation input, that is, the activation of the input element 251, generates an electrical signal that is detected by the controller 22 associated with that element.

The controller 22, in turn, generates, processes, and transmits an authorization message to the external electronic device 50, which recognizes that authorization message as explicit confirmation of the user's intention to connect to the corresponding electronic system 30.

Optionally, transmission of the authorization message may take place directly from the electronic device 20, 201, 202, 203, 204 of the bicycle electronic system 30 to the external electronic device 50.

Alternatively, such transmission may take place indirectly: in other words, the electronic device 20, 201, 202, 203, 204 that detected the user's interaction through the input element 251 sends the authorization message to another electronic device 20, 201, 202, 203, 204 of the electronic system 30, which then forwards it to the external electronic device 50.

This indirect mode typically occurs when the network 40 comprises a central device 20a and at least one peripheral device 20b.

The authorization message is encoded according to the specifications of the communication protocol used and comprises information indicating that the first confirmation input has been entered.

Such information may be, for example, the switching of a flag from 0 to 1, or a unique binary code associated with the confirmation event, or a structured message containing an identifier of the device and a timestamp of the received input, or other similar encoded messages indicating that the first user confirmation input has been received.

When the external electronic device 50 receives the authorization message, it is enabled to control the mechanical, electromechanical, or electronic components 10, that is, the electronic devices 20, 201, 202, 203, 204 of the bicycle electronic system 30.

In other words, receipt of the authorization message by the external electronic device 50 enables it to control the bicycle electronic system 30.

Following receipt of the authorization message, the external electronic device 50 interprets the information contained in the authorization message itself.

This procedure ensures that activation of the functions, namely enabling of the external electronic device 50, occurs only following a conscious input by the user, thereby increasing the security of the connection between the external electronic device 50 and the bicycle electronic system 30.

This procedure makes it possible to increase security when using an external electronic device 50 to control a bicycle electronic system 30, by introducing a form of two-factor authentication.

In this way, unauthorized persons are prevented from issuing commands to the electronic devices 20, 201, 202, 203, 204 of the electronic system 30, ensuring that only the legitimate user can interact with the bicycle's functions.

The enabling of the external electronic device 50 to control the bicycle electronic system 30 may comprise, by way of non-limiting example:
- sending configuration commands, firmware or software updates, or managing operating parameters of the electronic system 30;
- receiving diagnostic data, operating-status data, error data, or usage data generated by the electronic system 30;
- directly controlling electromechanical actuators associated with electronic devices 20, 201, 202, 203, 204, such as the gear shift 12, the front derailleur 13, an electronically adjustable seatpost 14, an electronically controlled fork or rear shock absorber, a pedal-assist motor, and so on;
- selectively activating or deactivating electronic devices 20, 201, 202, 203, 204;
- managing active or passive security functions of the electronic devices 20, 201, 202, 203, 204, including anti-theft systems, electronic movement locks, and satellite vehicle-tracking systems;
- modifying parameters stored in a memory 23 of the at least one electronic device 20, 201, 202, 203, 204 e
- entering or deleting data stored in the memory 23 of the at least one electronic device 20, 201, 202, 203, 204.

Optionally, as schematically shown in panel b) of Figure 6, the application running on the external electronic device 50 may provide indications 503a, 503b relating to the enabling procedure described above.

Such indications 503a, 503b consist of graphic, textual, and/or iconographic elements displayed on the display 501 of the external electronic device 50, in order to guide the user in correctly carrying out the operations required to complete authentication.

However, if the user does not interact with the electronic system 30 before the first timer expires, that is, within the first period, the enabling procedure stops and the external electronic device 50 is not enabled to control the electronic system 30.

In other words, if the external electronic device 50 does not receive the authorization message before the first timer expires, that is, before the first period ends, the enabling procedure stops and the external electronic device 50 is not enabled to control the electronic system 30.

In one example, after the enabling procedure has failed, the external electronic device 50 and the electronic system 30 are disconnected, unpaired.

In another example, after the enabling procedure has failed, the external electronic device 50 and the electronic system 30 remain connected, or paired, but the external electronic device 50 is not enabled to control the electronic devices 20, 201, 202, 203, 204 of the electronic system 30 to which it is connected, or paired.

In such a situation, optionally, when the first timer expires, the application starts a second timer having a defined and limited duration, referred to as the second period, which may be comparable to or different from the duration of the first timer.

With reference to panel c) of Figure 6, the user therefore has a second possibility to enable the external electronic device 50 to control the electronic system 30 of the bicycle by interacting with the external electronic device 50 or with the electronic system 30 of the bicycle.

Optionally, the further interaction consists of the external electronic device 50 receiving a second user confirmation input, hereinafter referred to as the second confirmation input.

Receipt of the second confirmation input generates a second authorization message.

In one example, the second confirmation input consists of the user entering, in the application of the external electronic device 50, the serial number of the electronic system 30, or similarly of one of the electronic devices 20, 201, 202, 203, 204 of the electronic system 30 that is intended to be controlled through the external electronic device 50.

The serial number may be a number present on one of the electronic devices 20, 201, 202, 203, 204 of the bicycle electronic system 30, or it may be in the user's possession separately, for example attached to or included in the packaging of the electronic system 30, communicated at the time of registration on the website of the electronic system 30, and the like.

The serial number is an identification code that makes it possible to uniquely identify each individual electronic system 30 or, alternatively, each individual electronic device 20, 201, 202, 203, 204 of the electronic system 30, or the central device 20a of the electronic system 30 to which connection is intended.

The serial number is entered on the external electronic device 50 in a dedicated field 504 of the application by means of a keyboard 505, whether physical or virtual.

In this case, the second authorization message is generated and processed by the external electronic device 50 itself following entry of the serial number.

In this case, that second authorization message is not transmitted to other devices, but is generated and managed internally by the controller 22 of the external electronic device 50 itself.

Receipt of the second authorization message by the controller 22 must therefore be understood as an internal logical confirmation, that is, as a positive self-assessment that allows the controller 22 of the external electronic device 50 to continue executing the enabling procedure, on the basis of the user's entry of the serial number.

Alternatively, the second confirmation input may comprise at least one of the actions described above with reference to the first confirmation input, namely: bringing the external device 50 close to the electronic system 30 to which connection is intended, for detection of a short-range communication element present on the electronic system 30; capturing, by means of the camera of the external electronic device 50, a two-dimensional or three-dimensional code present on an electronic device 20, 201, 202, 203, 204 of the electronic system 30 to which connection is intended, or on the bicycle on which that electronic system 30 is mounted; or interacting with an input element 251 of an electronic device 20, 201, 202, 203, 204 of the electronic system 30 to which connection is intended.

In the case of user interaction with an input element 251 of an electronic device 20, 201, 202, 203, 204 of the electronic system 30 to which connection is intended, the procedure is the same as that described above with regard to generation and receipt of the first authorization message. For the sake of brevity, explicit reference is made to what has been set out above.

In any case, when there is no physical transmission of the second authorization message from the bicycle electronic system 30 to the external electronic device 50, receipt of the second authorization message by the external electronic device 50 must therefore be understood as a logical confirmation internal to the controller 22 of the external electronic device 50.

That is, it is to be understood as a positive self-assessment that allows the controller 22 of the external electronic device 50 to continue executing the enabling procedure, on the basis of the user's entry of the serial number, or on the basis of detection, by the external electronic device 50, of a short-range communication element present on the electronic system 30, or acquisition by the camera of the external electronic device 50 of a two-dimensional or three-dimensional code present on an electronic device 20, 201, 202, 203, 204 of the electronic system 30 to which connection is intended.

If the external electronic device 50 does not receive the authorization message before the second timer expires, that is, within the second period, the enabling procedure has failed and the external electronic device 50 and the electronic system 30 are disconnected, or unpaired.

If, instead, the external electronic device 50 receives the authorization message before the second timer expires, within the second period, the enabling procedure is completed and the external electronic device 50 is enabled to control the electronic system 30, that is, the electronic devices 20, 201, 202, 203, 204 of the electronic system 30.

In the case of entry of the serial number, if the external electronic device 50 does not receive the serial number before the second timer expires, the enabling procedure has failed and the external electronic device 50 and the electronic system 30 are disconnected, or unpaired.

Conversely, if the external device 50 receives the serial number before the second timer expires, the enabling procedure is completed and the external electronic device 50 is enabled to control the electronic system 30, that is, the electronic devices 20, 201, 202, 203, 204 of the electronic system 30.

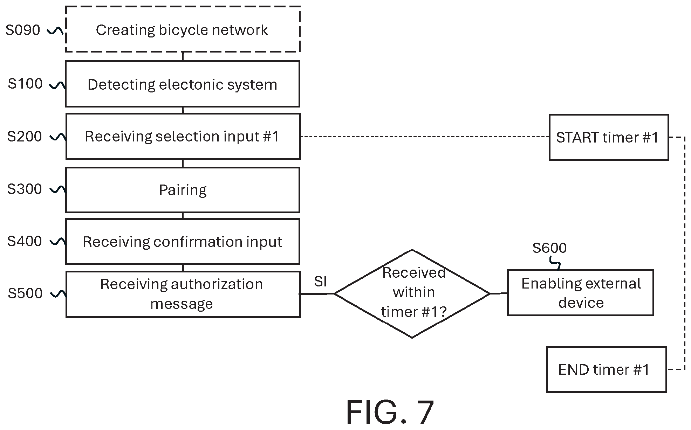

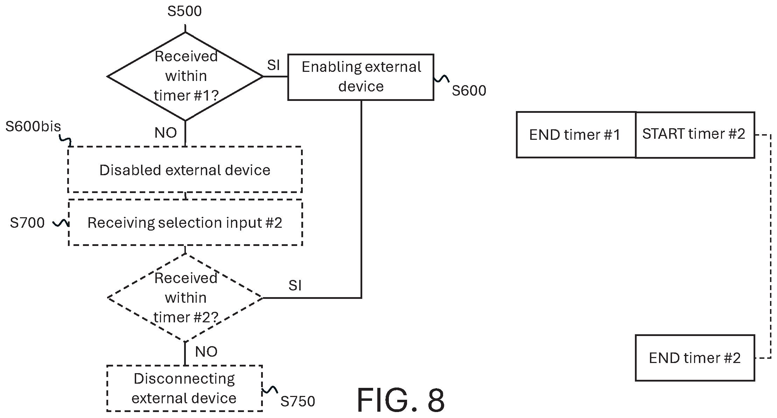

Figures 7 and 8 schematically show a method performed by an external electronic device 50 and at least one bicycle electronic system 30, for enabling the external electronic device 50 to control the at least one electronic system 30 comprising at least one electronic device 20, 201, 202, 203, 204.

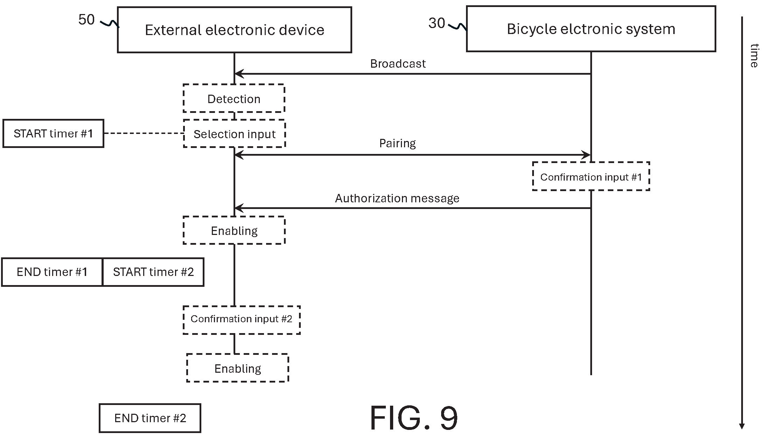

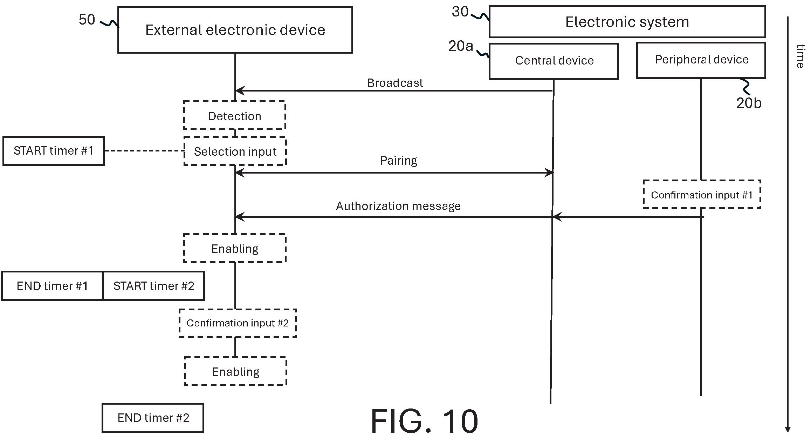

Reference is also made to Figures 9 and 10, which show the exchange of signals between the bicycle electronic system 30 and the external electronic device 50.

The description of the method makes explicit reference to what has been described above with regard to Figures 1 to 6.

The method comprises a first step, S100, consisting of detecting, by the external electronic device 50, at least one bicycle electronic system 30 and displaying, on a display 501 of the external electronic device 50, an indication 501a, 502b, 502c, 502n corresponding to the at least one detected bicycle electronic system 30.

Detection of the at least one bicycle electronic system 30 by the external device 50 takes place by detecting a broadcast signal, that is, a signal emitted autonomously by the bicycle electronic system 30.

The type, encoding, and structure of such broadcast signal depend on the type of communication used, such as Bluetooth^{®}, BLE, ANT, ANT+, and so on, and will not be discussed in detail.

For further details, reference is made to the description given in relation to Figure 6.

It forms part of the common knowledge of the person skilled in the art to adapt the method and the devices described and claimed according to the type of communication used.

At the same time, the external electronic device 50 starts a first timer having a defined duration, the first period, as described with regard to Figure 6.

A second step, S200, consists of receiving, on and by the external electronic device 50, a user selection input, hereinafter referred to as selection input, intended to request connection of the external electronic device 50 with the at least one bicycle electronic system 30.

Reference is made to what has been set out in relation to Figure 6 for the description and definition of selection input.

A third step, S300, consists of pairing, in response to receipt of the user selection input, the external electronic device 50 with the at least one bicycle electronic system 30, and preventing the external electronic device 50 from controlling the at least one paired bicycle electronic system 30.

During this third step, a certain number of messages are exchanged between the electronic system 30 and the external electronic device 50.

The type and structure of these messages depend on the type of communication used, for example Bluetooth^{®}, BLE, ANT, ANT+, and so on, and typically include information on the identity of the electronic devices 20, 201, 202, 203, 204 of the electronic system 30 and of the external electronic device 50 to be paired.

The exchange of such messages allows there to be, at the end of the pairing process, at least partial communication between the external electronic device 50 and the electronic system 30.

A fourth step, S400, comprises receiving, on and by the at least one bicycle electronic system 30, a first user confirmation input, hereinafter referred to as the first confirmation input, through a physical input element 251 placed on the at least one bicycle electronic system 30.

The first confirmation input consists of pressing a physical input element 251 placed on an electronic device 20, 201, 202, 203, 204 of the at least one bicycle electronic system 30.

For the types of input elements 251, reference is made to what has been set out above with reference to Figures 1 to 6.

In response to receipt, by an electronic device 20, 201, 202, 203, 204 of the bicycle electronic system 30, of the first user confirmation input, the controller 22 of the electronic device 20, 201, 202, 203, 204 generates an authorization message.

The authorization message is encoded according to the specifications of the communication protocol used and comprises information indicating that the first user confirmation input has been entered.

Such information may be, for example, the switching of a flag from 0 to 1, or a unique binary code associated with the confirmation event, or a structured message containing an identifier of the device and a timestamp of the received input, or other similar encoded messages indicating that the first user confirmation input has been received.

The authorization message is then transmitted, directly or indirectly, from the electronic device 20, 201, 202, 203, 204 that received the first user confirmation input to the external electronic device 50, which is configured and enabled to receive and interpret the confirmation message.

A fifth step, S500, comprises receiving, by the external electronic device 50, an authorization message generated in response to receipt of the first user confirmation input.

Following receipt of the authorization message, the external electronic device 50 interprets the information contained in the authorization message itself.

This procedure ensures that activation of the functions occurs only following a conscious input by the user, thereby increasing the security of the connection between the external electronic device 50 and the bicycle electronic system 30

If the authorization message is received within the first period, that is, before expiry of the first timer, as set out with reference to Figure 6, the method comprises a sixth step, S600, consisting of enabling the external electronic device 50 to control the at least one bicycle electronic system 30.

Such enabling may comprise, by way of non-limiting example:
- sending configuration commands, firmware or software updates, or managing operating parameters of the electronic system 30;
- receiving diagnostic data, operating-status data, error data, or usage data generated by the electronic system 30;
- directly controlling electromechanical actuators associated with electronic devices 20, 201, 202, 203, 204, such as the gear shift 12, the front derailleur 13, an electronically adjustable seatpost 14, an electronically controlled fork or rear shock absorber, a pedal-assist motor, and so on;
- selectively activating or deactivating electronic devices 20, 201, 202, 203, 204;
- managing active or passive security functions of the electronic devices 20, 201, 202, 203, 204, including anti-theft systems, electronic movement locks, and satellite vehicle-tracking systems;
- modifying parameters stored in a memory 23 of the at least one electronic device 20, 201, 202, 203, 204; and
- entering or deleting data stored in the memory 23 of the at least one electronic device 20, 201, 202, 203, 204.

With reference to Figure 8, if the authorization message is not received within the first period, that is, before expiry of the first timer, as set out with reference to Figure 6, the method comprises a step S600bis consisting of keeping the external electronic device 50 paired with the at least one bicycle electronic system 30 in a state in which it is disabled from controlling the bicycle electronic system 30, that is, not enabled to perform one of the operations listed above by way of example.

In this state, the external electronic device 50 and the bicycle electronic system 30 remain connected, but the user, by acting on the external electronic device 50, cannot modify the state of the bicycle electronic system 30, that is, cannot issue commands to the bicycle electronic system 30.

In other words, in this connection state, when the external electronic device 50 is not enabled to control the electronic system 30, the external electronic device 50 and the bicycle electronic system 30 exchange only the data necessary to maintain the connection.

Optionally, step S600bis comprises displaying, on the display 501 of the external electronic device 50, an alert message indicating that the external electronic device 50 is not enabled to control the at least one bicycle electronic system 30.

Optionally, if the authorization message is not received within the first period, that is, before expiry of the first timer, the method comprises a further step, S700, consisting of displaying, on the display 501 of the external electronic device 50, an indication to the user for receiving a second user confirmation input.

Upon expiry of the first timer, the external electronic device 50 starts a second timer having a predefined duration, the second period, as discussed with reference to Figure 6.

This further step, S700, also comprises receiving, on and by the external electronic device 50, a second user confirmation input, hereinafter referred to as the second confirmation input.

For the description of the second user confirmation input, explicit reference is made to what has been set out with reference to Figure 6.

If the second user confirmation input is received within a second period, that is, before expiry of the second timer, as set out with reference to Figure 6, the method comprises enabling the external electronic device 50 to control the at least one bicycle electronic system 30.

Conversely, if the second user confirmation input is not received within a second period, that is, before expiry of the second timer, as set out with reference to Figure 6, the method comprises a step, S750, consisting of unpairing, or disconnecting, the external electronic device 50 from the at least one bicycle electronic system 30.

With reference to Figure 9 and optionally, when the bicycle electronic system 30 comprises a plurality of electronic devices 20, 201, 202, 203, 204, the method comprises a preliminary step, S090, consisting, before the first step S100, of creating the bicycle network 40 by mutually interconnecting the electronic devices 20, 201, 202, 203, 204 of the bicycle electronic system 30.

Optionally, controlling the at least one bicycle electronic system 30 comprises connecting an additional electronic device to the bicycle network 40, or disconnecting one of the at least one electronic device 20, 201, 202, 203, 204 of the at least one bicycle electronic system 30 from the bicycle network 40.

In an example schematically shown in Figure 10, the second step, S200, comprises receiving the first user confirmation input through the input element 251 placed on one of the at least one electronic devices 20, 201, 202, 203, 204 of the at least one bicycle electronic system 30.

Furthermore, the method comprises receiving the authorization message from one of the at least one electronic devices 20, 201, 202, 203, 204 of the at least one bicycle electronic system 30.

Optionally, when the bicycle network 40 is created, the method comprises assigning to one of the at least one electronic devices 20, 201, 202, 203, 204 of the at least one electronic system 30 a role of central device 20a, and assigning to each of the remaining at least one electronic devices 20, 201, 202, 203, 204 a role of peripheral device 20b configured to communicate only with the central device 20a.

Optionally, when the first user confirmation input is received on the physical input element 251 placed on the at least one peripheral device 20b, the second step, S200, further comprises transmitting, by the at least one peripheral device 20b that received the first user confirmation input 251, a user-input notification to the central device 20a, and transmitting, by the central device 20a to the external electronic device 50, the authorization message on the basis of receipt, by the central device 20a, of the user-input notification.

In other words, step 200 consists of receiving, by the external electronic device 50, the authorization message from the central device 20a.

In another example, the first step, S100, of the method further comprises detecting a plurality of bicycle electronic systems 30, each mounted on a different bicycle 1, and displaying, on the display 501 of the external electronic device 50, a corresponding indication 502a, 502b, 502c, 502n for each of the plurality of bicycle electronic systems 30.

Optionally, the method comprises displaying, on the display 501 of the external electronic device 50, an indication of a distance between each of the plurality of bicycle electronic systems 30 and the external electronic device 50.

Preferably, the method comprises measuring, by the external electronic device 50, such distance on the basis of an intensity of a broadcast signal received by the external electronic device 50 from each of the plurality of bicycle electronic systems 30.

Optionally, the external electronic device 50 and the at least one electronic system 30 communicate through direct or indirect wireless communication, wherein communicating through indirect wireless communication comprises communicating through a server or an Internet node to which both the external electronic device 50 and the at least one bicycle electronic system 30 are connected.

Optionally, the method comprises, in response to the pairing between the external electronic device 50 and the at least one bicycle electronic system 30, notifying, from the at least one bicycle electronic system 30, the pairing by emitting a sound or a light through a notification element 252 of one of the at least one electronic devices 20, 201, 202, 203, 204 of the at least one bicycle electronic system 30 to which the external electronic device 50 is paired.

## Claims

1. A method, performed by an external electronic device (50) and at least one bicycle electronic system (30), mounted on a bicycle and comprising at least one bicycle electronic device (20, 201, 202, 203,204), for enabling the external electronic device (50) to control the at least one bicycle electronic system (30), the method comprising:
- detecting (S100), by the external electronic device (50), the at least one bicycle electronic system (30) and displaying, on a display (501) of the external electronic device (50), an indication (502a,502b,502c,502n) corresponding to the at least one detected bicycle electronic system (30),
- receiving (S200), on and by the external electronic device (50), a selection user input for selecting one of the at least one bicycle electronic system (30),
- coupling (S300), upon receiving the selection user input, the external electronic device (50) to the selected bicycle electronic system (30), and preventing the external electronic device (50) to control the selected bicycle electronic system (30),
**characterized in that** the method further comprises
- receiving (S400), on and by the selected bicycle electronic system (30), a first confirmation user input via a physical input element (251) located on the selected bicycle electronic system (30), and
- receiving (S500), by the external electronic device (50) from the selected bicycle electronic system (30), an authorization message generated in response to receiving the first confirmation user input, and
if the authorization message is received within a first time period, enabling (S600) the external electronic device (50) to control the selected bicycle electronic system (30), and if the authorization message is not received within the first time period, maintaining (S600bis) the external electronic device (50) coupled with the selected bicycle electronic system (30) in a state where it is prevented from controlling the selected bicycle electronic system (30),
wherein the first time period starts upon receiving the selection user input on and by the external electronic device (50).

2. The method of claim 1 further comprising, if the authorization message is not received within the first time period, displaying on the display (501) of the external electronic device (50) a request for receiving a second confirmation user input, and
receiving (S700), by the external electronic device (50), the second confirmation user input inputted by the user on the external electronic device (50), and
if the second confirmation user input is inputted within a second time period, enabling (S600) the external electronic device (50) to control the selected bicycle electronic system (30), and
if the second confirmation user input is not inputted within a second time period, decoupling (S750) the external electronic device (50) from the bicycle electronic system (30),
wherein the second time period starts upon expiry of the first time period.

3. The method of anyone of the previous claims further comprising, upon enabling (S600) the external electronic device (50), controlling the selected bicycle electronic system (30) through the external electronic device (50).

4. The method of claim 3, wherein controlling the selected bicycle electronic system (30) comprises at least one of:
- controlling an electromechanical device associated to the at least one electronic device (20,201,202,203,204) of the selected bicycle electronic system (30),
- modifying parameters stored in a memory of the at least one electronic device (20,201,202,203,204) of the selected bicycle electronic system (30),
- saving or deleting data stored in the memory of the at least one electronic device (20,201,202,203,204) of the selected bicycle electronic system (30), and
- updating a software stored in a memory of the at least one electronic device (20,201,202,203,204) of the selected bicycle electronic system (30).

5. The method of anyone of the previous claims, wherein the at least one bicycle electronic system (30) comprises a plurality of bicycle electronic device (20, 201, 202, 203,204) and wherein the method further comprises, prior to detecting the at least one bicycle electronic system (30), creating (S090) a bicycle network (40) by interconnecting the bicycle electronic device (20, 201, 202, 203,204) of the at least one bicycle electronic system (30) one with another.

6. The method of claim 5 as dependent on claim 3 or 4, wherein controlling the selected bicycle electronic system (30) comprises connecting an additional electronic device to the bicycle network (40) or disconnecting one of the at least one bicycle electronic device (20, 201, 202, 203,204) of the selected bicycle electronic system (30) from the bicycle network (40).

7. The method of anyone of claims 3 to 6, wherein receiving (S700), by the selected bicycle electronic system (30), the first confirmation user input via a physical input element (251) located on the at least one bicycle electronic system (30) of the selected bicycle electronic system (30), comprises receiving the first confirmation user input via the physical input element (251) located on one of the at least one electronic device (20, 201, 202, 203,204) of the selected bicycle electronic system (30) and wherein receiving (S500), by the external electronic device (50), the authorization message comprises receiving, by the external electronic device (50), the authorization message from one of the at least one bicycle electronic device (20, 201, 202, 203,204) of the selected bicycle electronic system (30).

8. The method of claim 6 or claim 7, wherein creating (S090) the bicycle network (40) comprises assigning to one bicycle electronic device (20, 201, 202, 203,204) of the selected bicycle electronic system (30) a role of central device (20a) and to each of the at least one remaining electronic device a role of peripheral device (20b) configured to communicate only with the central device (20a).

9. The method of claim 8 further comprising, upon receiving (S400) the first confirmation user input on the physical input element (251) located on the at least one peripheral device (20b),
transmitting, by the at least one peripheral device (20b), a user input notification to the central device (20a), and transmitting, by the central device (20a) to the external electronic device (50), the authorization message based on receiving, by the central device (20a), the user input notification.

10. The method of claim 8 or claim 9, wherein receiving, by the external electronic device (50) from the selected bicycle electronic system (30), the authorization message comprises receiving the authorization message from the central device (20a).

11. The method of anyone of previous claims, wherein detecting the at least one bicycle electronic system (30) includes detecting a plurality of bicycle electronic system (30)s, each mounted on a different bicycle, and displaying, on the display (501) of the external electronic device (50), an indication (502a,502b,502c,502n) corresponding to the each of the plurality of bicycle electronic systems (30).

12. The method of claim 11 further comprising displaying, on the display (501) of the external electronic device (50), an indication of a distance between each of the plurality of the detected bicycle electronic systems (30) and the external electronic device (50).

13. The method of claim 12 further comprising measuring, by the external electronic device (50), the distance to each of the plurality of the detected bicycle electronic systems (30) based on a strength of a broadcast signal received by the external electronic device (50) and emitted by each of the plurality of the detected bicycle electronic systems (30).

14. The method of anyone of the previous claims, wherein the external electronic device (50) and the at least one bicycle electronic system (30) communicate through a direct or an indirect wireless communication, wherein communicating through the indirect communication comprises communicating through a server or an internet node to which both the external electronic device (50) and the at least one bicycle electronic system (30) are connected.

15. The method of anyone of the previous claims, further comprising, upon coupling the external electronic device (50) to the selected bicycle electronic system (30), notifying, by the selected bicycle electronic system (30), the coupling by emitting sound or light through a notification element (252) of one of the at least one electronic device (20, 201, 202, 203,204) of the selected bicycle electronic system (30) 30.
